Europäisches Patentamt

European Patent Office

Office européen des brevets

(19)

(11) Veröffentlichungsnummer: **0 612 181 A1**

(12) **EUROPÄISCHE PATENTANMELDUNG**

(21) Anmeldenummer: 93115765.5

(51) Int. Cl.5: **H04N 1/40**

(22) Anmeldetag: **30.09.93**

(30) Priorität: **19.02.93 DE 4305140**
**17.09.93 DE 4331644**

(43) Veröffentlichungstag der Anmeldung:
**24.08.94 Patentblatt 94/34**

(84) Benannte Vertragsstaaten:
**BE DE FR GB**

(71) Anmelder: **LINOTYPE-HELL AG**
**Siemenswall**
**D-24107 Kiel (DE)**

(72) Erfinder: **Preuss, Dieter**
**Seebrookswiese 21**
**D-24147 Klausdorf (DE)**
Erfinder: **Stritzel, Bernd Karl**
**Wilhelm-Lehmann-Strasse 3 c**
**D-24340 Eckernförde (DE)**
Erfinder: **Wadle, Heinrich**
**Hagedornbusch 45**
**D-24536 Neumünster (DE)**

(54) **Verfahren und Einrichtung zur Umwandlung von Halbtonwerten in Binärwerte.**

(57) Die Erfindung betrifft ein Verfahren zur Umwandlung von Halbtonwerten in Binärwerte bei der frequenzmodulierten Rasterung von Halbtonbildern. Die Aufzeichnungsfläche wird lückenlos in Teilfelder aufgeteilt. Jedem Teilfeld wird ein Feld von Schwellwerten aus einem Vorrat von gespeicherten Schwellwert-Feldern nach einer Zufallsauswahl zugeordnet. Jedes Schwellwert-Feld des Vorrats weist eine andere, vorzugsweise zufällig geänderte, Verteilung der Schwellwerte auf. Die Schwellwerte werden punkt- und zeilenweise mit den zugehörigen Halbtonwerten verglichen und aufgrund des Vergleichs werden Binärwerte erzeugt, welche entscheiden, ob ein möglicher Belichtungspunkt in der Aufzeichnungsfläche als Rasterpunkt belichtet wird oder nicht.

Fig.2

EP 0 612 181 A1

Die Erfindung bezieht sich auf das Gebiet der elektronischen Reproduktionstechnik und betrifft ein Verfahren zur Umwandlung von Halbtonwerten in Binärwerte bei der frequenzmodulierten Rasterung von Halbtonbildern sowie eine Einrichtung zur Durchführung des Verfahrens. Unter Halbtonbildern sollen sowohl Farbbilder als auch Schwarz/Weiß-Bilder verstanden werden.

Beim Mehrfarbendruck werden zu reproduzierende Farbbilder im allgemeinen in den vier Druckfarben "Cyan" (C), "Magenta" (M), "Gelb"' (Y) und "Schwarz" (K) gedruckt. Die als Halbton-Farbbilder vorliegenden Originale werden zunächst in einem Farbscanner punkt- und zeilenweise, optoelektronisch abgetastet, um für jeden abgetasteten Bildpunkt die Farbanteile "Rot", "Grün" und "Blau" als Farbwerte (R,G,B) zu gewinnen. Die Farbwerte (R,G,B) des abgetasteten Farbbildes werden dann durch eine Farbkorrekturrechnung in die Farbauszugswerte (C,M,Y,K) für die Farbauszüge "Cyan", "Magenta", "Gelb" und "Schwarz" umgerechnet. Nach der Umrechnung stehen für jeden Bildpunkt des abgetasteten Halbton-Farbbildes vier Farbauszugswerte (C,M,Y,K) als Halbtonwerte im Wertebereich von 0 bis 100% zur Verfügung. Die Farbauszugswerte (C,M,Y,K) sind ein Maß für die Farbdichten, mit denen die vier Druckfarben Cyan", "Magenta", "Gelb" und "Schwarz" auf dem Bedruckstoff gedruckt werden. In Sonderfällen, in denen mit mehr als vier Farben gedruckt wird (Schmuckfarben), ist jeder Bildpunkt durch eine der Anzahl von Druckfarben entsprechende Anzahl von Farbauszugswerten gekennzeichnet.

Die Farbauszugswerte (C,M,Y,K) können z.B. mit 8 bit je Bildpunkt und Druckfarbe digital codiert sein, womit der Wertebereich von 0 bis 100% in 256 Tonwertstufen unterteilt ist. Die Farbauszugswerte (C,M,Y,K) können on-line weiterverarbeitet oder für eine spätere Weiterverarbeitung zwischengespeichert werden.

Unterschiedliche Halbtonwerte eines zu reproduzierenden Farbbildes lassen sich im Druck nur durch eine Flächenmodulation der aufgetragenen Druckfarben, d.h. durch Rasterung, erzeugen.

Daher werden mit Hilfe der Farbauszugswerte (C,M,Y,K) vier gerasterte Farbauszüge "Cyan", "Magenta", "Gelb" und "Schwarz" in einem Farbauszugs-Belichter, auch Recorder oder Imagesetter genannt, punkt- und zeilenweise auf einem Aufzeichnungsmaterial belichtet. Die gerasterten Farbauszüge dienen als Druckformen für den Mehrfarbendruck. In der Druckmaschine erfolgt dann der Übereinanderdruck der unterschiedlich eingefärbten gerasterten Druckformen zu einer mehrfarbigen Reproduktion.

Die Flächenmodulation der Druckfarben kann beispielsweise nach einem Verfahren zur Punktrasterung (autotypische Rasterung) erfolgen, bei dem unterschiedliche Halbtonwerte des Halbton-Farbbildes in Rasterpunkte unterschiedlicher Größe umgewandelt und gedruckt werden, die in einem regelmäßigen Raster mit sich periodisch wiederholenden Rastermaschen angeordnet sind. Durch den Übereinanderdruck von periodisch angeordneten Rasterpunkten können störende Moiré-Strukturen im Druck auftreten. Um solche störenden Moiré-Strukturen zu minimieren, werden die Punktraster der vier Druckfarben unter verschiedenen Rasterwinkeln angeordnet, z.B. den Raster-winkeln 0°, 15°, 45° und 75°.

In diesem Fall werden die gerasterten Farbauszüge "Cyan", "Magenta", "Gelb" und "Schwarz" mit Punktrastern unterschiedlicher Rasterwinkelung belichtet.

Aus der DE-A-28 27 596 ist bereits ein Verfahren zur Herstellung von gerasterten Farbauszügen mit Punktrastern beliebiger Rasterwinkelung durch punkt- und zeilenweise Abtastung eines Halbton-Farbbildes und durch punkt- und zeilenweise Belichtung mittels eines über eine Aufzeichnungsfläche bewegten Aufzeichnungsorgans bekannt. Bei diesem Raster-Verfahren ist eine Matrix in eine Vielzahl von Matrixelementen unterteilt und jedem Matrixelement ein Schwellwert zugeordnet. Die Schwellwerte der Matrix (Rasterberg) repräsentieren die sich periodisch wiederholende Grundstruktur für jede Rastermasche des Punktrasters. Die den einzelnen Matrixelementen zugeordneten Schwellwerte sind in einer Speichermatrix jeweils auf denjenigen Speicherplätzen abgelegt, die der Lage der entsprechenden Matrixelemente innerhalb der Matrix entsprechen. Das Aufzeichnungsmaterial für die Farbauszüge ist in eine Vielzahl von Flächenelementen unterteilt. Bei der Aufzeichnung der Farbauszüge werden die Rasterpunkte in den einzelnen Rastermaschen des Punktrasters aus belichteten Flächenelementen (Belichtungspunkte; Belichtungspixel) zusammengesetzt. Die Überprüfung, ob ein Flächenelement als Teil eines Rasterpunktes innerhalb einer Rastermasche zu belichten ist oder nicht, erfolgt durch einen Vergleich der der aktuellen Rastermasche zugeordneten Halbtonwerte des Farbbildes mit einem entsprechend der Lage des Flächenelementes innerhalb der aktuellen Rastermasche ausgewählten Schwellwert der Matrix, wodurch die Halbtonwerte in hochaufgelöste Binärwerte mit nur zwei Helligkeitswerten (Schwarz und Weiß) umgewandelt werden, die das Muster des modulierten Punktrasters bilden.

Bei diesem bekannten Punktraster-Verfahren können zwar gedrehte Rastersysteme mit beliebigen Rasterwinkeln erzeugt werden, dennoch hat es sich in der Praxis als schwierig erwiesen, für alle möglichen Anwendungsfälle Rastersysteme zu finden, die kein Moiré aufweisen, besonders wenn mehr als vier Farben übereinandergedruckt werden sollen. Es kann auch vorkommen, daß das Punktraster mit Feinstrukturen des Bildinhalts, z.B. einem Textilmuster, störende Moiré-Strukturen bildet.

Alternativ zum Punktraster-Verfahren kann die Flächenmodulation der Druckfarben auch nach einem Verfahren zur frequenzmodulierten Rasterung (Rauschrasterung; stochastische Rasterung), beispielsweise nach der DE-A 29 31 098, erfolgen, bei dem die Halbtonwerte des Farbbildes durch eine Anordnung von kleinen gleichgroßen Druckpunkten die in der Aufzeichnungsfläche möglichst gleichmäßig verteilt sind, wiedergegeben werden. Die Anzahl der Druckpunkte je Flächeneinheit bestimmt den wiedergegebenen Halbton bzw. Grauwert.

Auch bei den Verfahren zur frequenzmodulierten Rasterung wird die Entscheidung, ob ein Punkt belichtet werden soll oder nicht, durch einen Vergleich von Halbtonwerten mit den Schwellwerten einer Schwellwert-Matrix, beispielsweise mit einer Dither-Matrix, herbeigeführt.

Die bekannten Verfahren zur frequenzmodulierten Rasterung haben zwar den Vorteil, daß keine Raster mit unterschiedlichen Rasterwinkelungen erzeugt werden müssen und daß bei unregelmäßiger Anordnung der Belichtungspunkte keine Moiré-Strukturen entstehen, dennoch können gelegentlich im Druckbild regelmäßige störende Muster auftreten. Außerdem sind die erforderlichen Rechen-Algorithmen sehr zeitintensiv, so daß nur eine relativ geringe Aufzeichnungsgeschwindigkeit bei der Rasterung erreicht werden kann. Dies gilt insbesondere dann, wenn gleichzeitig noch die Quantisierungsfehler bei der Schwellwert-Entscheidung nach dem sogenannten "Error Diffusion"-Verfahren kompensiert werden, um eine bessere Reproduktionsqualität zu erreichen.

Aufgabe der vorliegenden Erfindung ist es daher, die bekannten Verfahren zur Umwandlung von Halbtonwerten in Binärwerte bei der frequenzmodulierten Rasterung von Halbtonbildern sowie die bekannten Einrichtungen zur Durchführung des Verfahrens dahingehend zu verbessern, daß zur Erzielung einer guten Reproduktionsqualität störende Muster vollständig vermieden und gleichzeitig eine hohe Geschwindigkeit bei der gerasterten Aufzeichnung erreicht wird.

Diese Aufgabe wird bezüglich des Verfahrens durch die im Anspruch 1 angegebenen Merkmale und bezüglich der Einrichtung durch die in den Ansprüchen 13 und 14 angegebenen Merkmale gelöst.

Vorteilhafte Weiterbildungen sind in den Unteransprüchen angegeben.

Mit dem erfindungsgemäßen Verfahren werden die Halbtonwerte in hochaufgelöste Binärwerte umgewandelt, jedoch nicht in der Anordnung der bekannten Punktraster mit modulierten Punktgrößen, sondern in einer unregelmäßigen, frequenzmodulierten Struktur, d.h. ein Halbtonwert wird in eine mehr oder weniger dichte unregelmäßige Anordnung kleiner aber gleich großer Rasterpunkte abgebildet. Diese unregelmäßige Anordnung wird vom Auge beim Betrachten je nach Zahl der Rasterpunkte pro Flächeneinheit zu einem Halbtoneindruck ohne störende Musterbildung integriert. Mit dem erfindungsgemäßen Verfahren lassen sich hohe Aufzeichnungsgeschwindigkeiten bei guter Reproduktionsqualität erreichen, ohne daß Quantisierungsfehler beispielsweise nach dem "Error Diffusion"-Verfahren durch komplizierte und zeitraubende Rechenoperationen kompensiert werden müssen. Insbesondere können weiche Übergänge bei schwer reproduzierbaren Tönen wie bei Hauttönen erzielt und Verläufe, d.h. allmähliche Dichteänderungen, ohne störende Dichtesprünge generiert werden.

Die Erfindung wird nachfolgend anhand der Fig. 1 bis 6 näher erläutert.

Es zeigen:

Fig. 1    die Unterteilung einer Aufzeichnugsfläche in Teilfelder,

Fig. 2    ein Schwellwert-Feld,

Fig. 3    ein Vorrat von Schwellwert-Feldern,

Fig. 4    einen vergrößerten Ausschnitt aus einer Aufzeichnungsfläche,

Fig. 5    ein Ausführungsbeispiel für eine Einrichtung zur Umwandlung von Halbtonwerten in Binärwerte als Blockschaltbild **und**

Fig. 6    ein weiteres Ausführungsbeispiel für eine Einrichtung.

Zur Erzeugung der frequenzmodulierten Struktur von Rasterpunkten wird zunächst in einem ersten Verfahrenschritt die Aufzeichnugsfläche (1) für die Farbauszüge eines Farbbildes in Teilfelder (2) aufgeteilt. Die Aufteilung erfolgt vorzugsweise in der Belichtungs-Auflösung des verwendeten Farbauszugs-Belichters, die von der Größe der in dem Farbauszugs-Belichter erzeugten Belichtungspunkte (Belichtungspixel) abhängig ist. Die Teilfelder (2) sind in x-Richtung (Zeilenrichtung) und in y-Richtung eines xy-Koordinatensystems orientiert, das der Aufzeichnungsfläche (1) bzw. dem zu reproduzierenden Halbton-Farbbild zugeordnet ist.

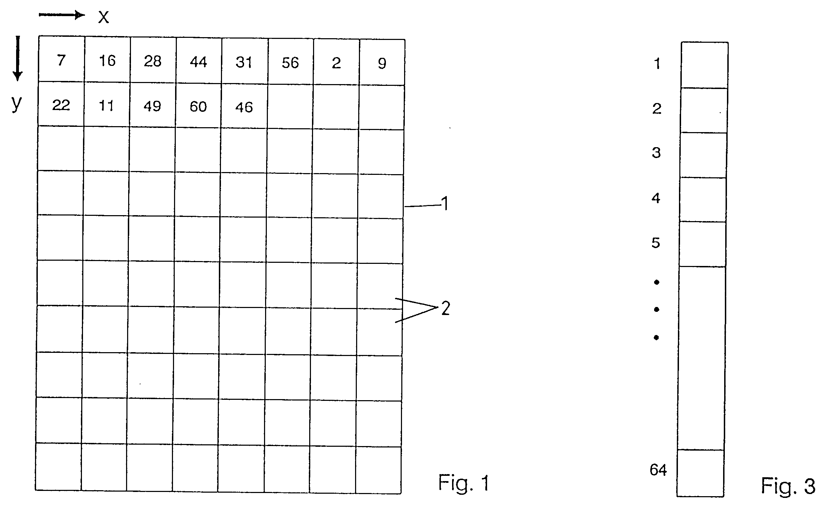

Fig. 1 zeigt die Unterteilung der Aufzeichnungsfläche (1) eines Farbauszuges für ein zu druckendes Halbton-Farbbild oder einer ganzen Druckseite in Teilfelder (2).

Vorzugsweise sind die Teilfelder (2) alle gleich groß und rechteckig oder quadraisch. Auch anders geformte Teilfelder (2) sind möglich, die die Aufzeichnungsfläche (1) lückenlos in Teilfelder (2) aufteilen. In dem beschriebenen Beispiel haben die Teilfelder (2) eine Größe von 16 x 16 möglichen Belichtungspunkten. Jedes Teilfeld (2) besteht somit aus 16 Zeilen mit jeweils 16 möglichen Belichtungspunkten pro Zeile.

Wenn die Abtast-Auflösung des Farbbild-Abtasters, d.h. die Auflösung eines Farbbildes in Bildpunkte, der Belichtungs-Auflösung des Farbauszugs-Belichter, d.h. der Auflösung der Aufzeichnungsfläche in Belichtungspunkte, entspricht, z.B. bei einem Reproduktionsmaßstab von 1:1, ist jedem möglichen Belichtungspunkt mit den Ortskoordinaten (x,y) in einem Teilfeld (2) automatisch ein lagemäßig entsprechender Halbtonwert D(x,y) eines Bildpunktes im Halbton-Farbbild zugeordnet, bei 16 x 16 möglichen Belichtungspunkten also 16 x 16 Halbtonwerte D(x,y). Die Halbtonwerte D(x,y) entsprechen je nach dem, welcher Farbauszug gerade belichtet wird, den Farbauszugswerten C, M, Y oder K.

Wenn sich die Abtast-Auflösung dagegen aufgrund eines von 1:1 abweichenden Reproduktionsmaßstabes von der Belichtungs-Auflösung unterscheidet, erweist es sich als zweckmäßig, eine Anpassung der Auflösungen durchzuführen, da die Reproduktionsqualität um so besser ist je kleiner die Auflösungs-Differenz ist. Ist die Abtast-Auflösung kleiner als die Belichtungs-Auflösung, werden die Halbtonwerte D(x,y) der Bildpunkte jeweils pro Teilfeld (2) so oft in x- und y-Richtung wiederholt bis ihre Anzahl der Anzahl von möglichen Belichtungspunkten in dem Teilfeld (2) entspricht. Ist die Abtast-Auflösung dagegen größer als die Belichtungs-Auflösung, werden Halbtonwerte D(x,y) ausgelassen bis ihre Anzahl wiederum der Anzahl von möglichen Belichtungspunkten im Teilfeld (2) entspricht. Auch komplexere Maßstabänderungen, z.B. durch Interpolation von Zwischenwerten, lassen sich durchführen.

In einem zweiten Verfahrensschritt wird vor der Ermittlung der Binärwerte B (x,y) ein Schwellwert-Feld (3) (Schwellwert-Matrix) erzeugt und gespeichert, in dem den einzelnen Flächenelementen (4) des Schwellwert-Feldes (3) Schwellwerte S(i,j) zugeordnet sind. Die Flächenelemente (4) bzw. Schwellwerte S(i,j) sind durch Ortskoordinaten (i,j) eines dem Schwellwert-Feld (3) zugeordneten ij-Koordinatensystems adressierbar, das in Richtung des xy-Koordinatensystems orientiert ist.

Das Schwellwert-Feld (3) enthält in dem beschriebenen Ausführungsbeispiel so viele unterschiedliche Schwellwerte S(i,j) wie unterschiedliche Halbtonwerte D(x,y) maximal in einem Halbton-Farbbild enthalten sein können. Bei einem Wertebereich der Halbtonwerten D(x,y) von 0 bis 255 gibt es demnach Schwellwerte S(i,j) von 0 bis 255. Es kann aber gelegentlich von Vorteil sein, mehr unterschiedliche Schwellwerte S(i,j) als unterschiedliche Halbtonwerte D(x,y) vorzusehen.

Die Anzahl der Schwellwerte S(i,j) im Schwellwert-Feld (3) wird in zweckmäßiger Weise gleich der Anzahl von möglichen Belichtungspunkten in einem Teilfeld (2) gewählt. Im Ausführungsbeispiel weist das Schwellwert-Feld (3) demnach 16 x 16 Schwellwerte S(i,j) auf, so daß nach der zuvor beschriebenen Anpassung der Abtast-Auflösung an die Belichtungs-Auflösung für jeden Halbtonwert D(x,y) auch ein Schwellwert S(i,j) zum Vergleich zur Verfügung steht.

Die Verteilung der Schwellwerte S(i,j) innerhalb des Schwellwert-Feldes (3) ist so getroffen, daß sich bei der Belichtung eine genügend kleinmustrige, aber regellose Verteilung der Rasterpunkte ergibt.

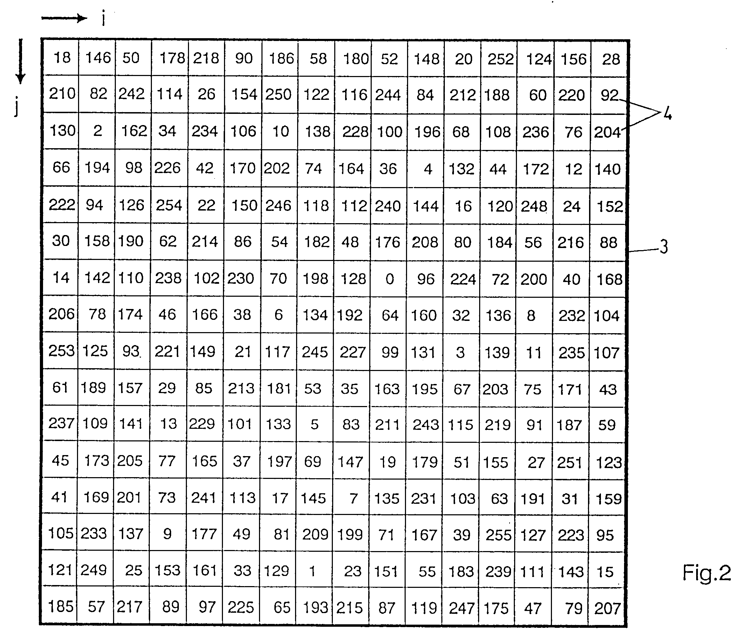

Fig. 2 zeigt ein solches Schwellwert-Feld (3) mit 16 x 16 Flächenelementen (4) bzw. Schwellwerten S-(i,j).

Zur Ermittlung der Binärwerte B(x,y) wird in einem dritten Verfahrensschritt vor dem Vergleich jedem Teilfeld (2) der Aufzeichnungsfläche (1) jeweils ein Schwellwert-Feld (3) mit einer anderen, vorzugsweise zufälligen, Verteilung der Schwellwerte S(i,j) innerhalb des Schwellwert-Feldes (3) per Zufall zugeordnet. Die Halbtonwerte D(x,y) der entsprechenden Teilfelder (2) werden dann punktweise mit den lagemäßig übereinstimmenden Schwellwerten S(i,j) der jeweils zufällig zugeordneten Schwellwert-Felder (3) mit unterschiedlicher Schwellwert-Verteilung verglichen. Durch den Vergleich werden die Halbtonwerte D(x,y) in hochaufgelöste Binärwerte B(x,y) mit nur zwei Helligkeitswerten (Schwarz und Weiß) umgewandelt, wodurch für jeden Halbtonwert D(x,y) entschieden wird, welche der möglichen Belichtungspunkte in den einzelnen Teilfeldern (2) der Aufzeichnungsfläche (1) tatsächlich als Rasterpunkte belichtet und im späteren Druck als Druckpunkte auf dem Bedruckstoff geschwärzt werden. Die Entscheidung wird beispielsweise so getroffen, daß ein möglicher Belichtungspunkt dann als Rasterpunkt belichtet wird, wenn ein Halbtonwert D(x,y) oberhalb des zugehörigen Schwellwertes S(i,j) liegt.

Zur Wiedergabe eines Halbtonwertes D(x,y) von beispielsweise 25% in einem Teilfeld (2) werden 25% der möglichen Belichtungspunkte als Rasterpunkte in dem Teilfeld (2) belichtet, wobei die Rasterpunkte aufgrund der unregelmäßigen Verteilung der Schwellwerte S(i,j) unregelmäßig über die gesamte Teilfläche (2) verteilt sind.

Bei Verwendung von Schwellwert-Feldern (3) mit gleicher Schwellwert-Anordnung wäre die Struktur der Belichtungspunkte in den einzelnen Teilfeldern (2) zwar schon unregelmäßig, die Verwendung von Schwellwert-Feldern (3) mit von Teilfläche (2) zu Teilfläche (2) wechselnden Schwellwert-Anordnungen hat darüber hinaus den Vorteil, daß die Ausbildung einer störenden übergeordneten Struktur aufgrund einer Blockaufteilung gleichartiger Teilfelder (2) vermieden wird.

Die Zuordnung von Teilfeldern (2) und Schwellwert-Feldern (3) nach dem dritten Verfahrenschritt kann in einem ersten Ausführungsbeispiel durch Zufallsauswahl erfolgen. In diesem Fall wird ein Vorrat N, z.B. N = 64, von Schwellwert-Feldern (3) mit jeweils einer anderen, vorzugsweise zufälligen, Verteilung von Schwellwerten S(i,j) erzeugt. Den einzelnen Schwellwert-Feldern (3) werden Feldnummern k von 1 bis 64 zugeordnet und die zugehörigen Schwellwerte $S_k$ (x,y) der einzelnen Schwellwert-Felder k gespeichert.

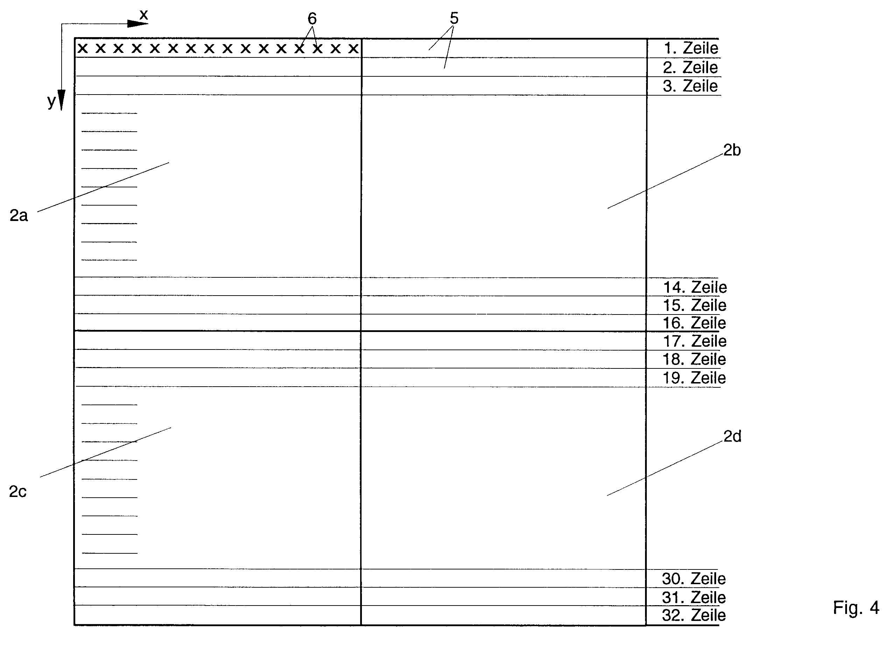

Fig. 3 zeigt einen solchen Vorrat von N = 64 Schwellwert-Feldern (3).

Die zum Vergleich herangezogenen Schwellwert-Felder k mit jeweils unterschiedlicher Verteilung der Schwellwert $S_k(i,j)$ werden dann vor dem Vergleich aus dem gespeicherten Vorrat N per Zufall ausgewählt. In Fig. 1 sind beispielsweise in einige der Teilfelder (2) die Feldnummern k der jeweils zum Vergleich ausgewählten Schwellwert-Felder (3) eingetragen.

Bei einer Verfahrensvariante wird vor der Zuordnung von Teilfeldern (2) und Schwellwert-Feldern (3) jeweils nur die Verteilung der Schwellwerte S(i,j) innerhalb eines erzeugten Schwellwert-Feldes (3) geändert, vorzugsweise zufällig geändert, wobei wiederum jedem Teilfeld (2) ein Schwellwert-Feld (3) mit einer anderen Schwellwert-Verteilung zum Vergleich zugeordnet wird.

Bei einer weiteren Verfahrensvariante wird der Vergleich von Schwellwerten S(i,j) und Halbtonwerten D-(x,y) nicht on-line während der Belichtung der Farbauszüge, sondern vor der Belichtung durchgeführt und die dabei ermittelten Binärwerte B(x,y) in Form eines Binärwert-Feldes (Bitmap) abgespeichert, das während der Belichtung ausgelesen wird.

Beim Vergleich von Halbtonwerten D(x,y) und Schwellwerten S(i,j) kann beispielsweise so vorgegangen werden, daß die Halbtonwerte D(x,y) und die Schwellenwerte S(i,j) zeilenweise und innerhalb der Zeilen punktweise durch alle Teilfelder (2) der Aufzeichnungsfläche (1) aufgerufen werden.

Der Ablauf wird anhand der Fig. 4 näher erläutert.

Fig. 4 zeigt einen vergrößerten Ausschnitt aus der Aufzeichnungsfläche (1) mit zwei in x-Richtung nebeneinander liegenden Teilfeldern (2a und 2b) und zwei sich in y-Richtnug anschließenden Teilfeldern (2c und 2d). In dem bereits zuvor genannten Beispiel entfallen auf jedes Teilfeld (2) 16, in y-Richtung nebeneinander liegende Zeilen (5) mit jeweils 16, in y-Richtung aneinander gereihten möglichen Belichtungspunkten (6). Beim Durchlaufen der 1. Zeile (6) wird beispielweise für das erste Teilfeld (2a) ein Schwellwert-Feld (3) mit der Feldnummer k = 7, für das zweite Teilfeld (2b) ein Schwellwert-Feld (3) mit der Feldnummer k = 16 und für die sich in x-Richtung anschließenden, nicht dargestellten Teilfelder (2), wie in Fig. 1 angedeutet, Schwellwert-Feld (3) mit den Feldnummern k = 28, 44, 31, 56, 2 und 9 aufgerufen, wobei der Wechsel der Schwellwert-Felder (3) jeweils an den Grenzen der einzelnen Teilfelder (2) erfolgt.

Beim Durchlaufen der 1. Zeile (5) werden die Feldnummern k der für die einzelnen Teilfelder (2) aufgerufenen Schwellwert-Felder (3) gespeichert und beim Durchlaufen der 2. bis 16. Zeile derselben Teilfelder (2) jeweils erneut in der gespeicherten Reihenfolge aufgerufen, so daß der Vergleich in den Teilfeldern (2a und 2b) sowie in den sich in Zeilenrichtung anschließenden Teilfeldern jeweils anhand der erstmals zugeordneten Schwellwert-Felder (3) erfolgt.

In der 17. Zeile werden dann erstmals in y-Richtung benachbarte, neue Teilfelder (2c und 2d) und weitere sich in Zeilenrichtung anschließende Teilfelder (2) durchlaufen, wobei diesen Teilfeldern (2), wie für die 1. Zeile beschrieben, neue Schwellwert-Felder (3) mit anderen Feldnummern k zufällig zugeordnet werden, beispielsweise, wie in Fig. 1 angedeutet, die Feldnummern k = 22, 11, 49, 60 und 46.

Alternativ zu der zuvor beschriebenen Vorgehensweise, bei der die Teilfelder (2) der gesamte Aufzeichnungsfläche (1) zeilenweise durchlaufen werden, kann der Vergleich von Halbtonwerten D(x,y) mit den zugehörigen Schwellwerten S(x,y) für ein Teilfeld (2) vollständig durchgeführt und dann zu einem benachbarten Teilfeld (2) übergegangen werden.

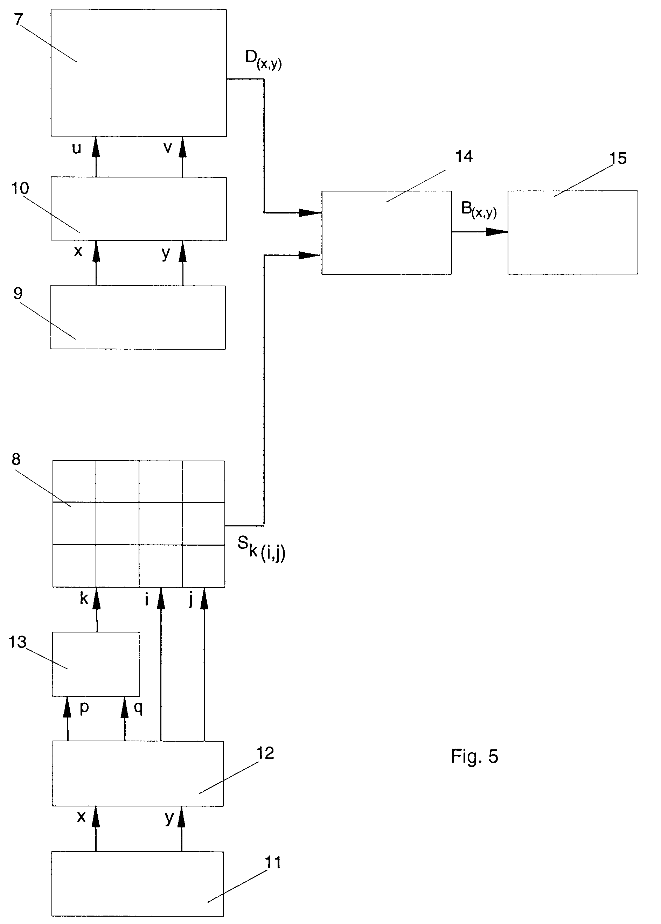

Fig. 5 zeigt ein erstes Ausführungsbeispiel für eine Einrichtung zur Durchführung des Verfahrens für den Fall, daß die Zuordnung von Teilfeldern (2) und Schwellwert-Feldern (3) durch Zufallsauswahl erfolgt.

Ein Bild-Speicher (7) enthält die Halbtonwerte D(x,y) für einen der Farbauszüge, z.B. codiert mit 8 bit je Halbtonwert. Ein Schwellwert-Speicher (8) enthält einen Vorrat von N verschiedenen Schwellwert-Feldern (3) mit den Feldnummern k von 1 bis N. Die einzelnen Schwellwert-Felder (3) weisen jeweils eine unregelmäßige Verteilung der Schwellwerte $S_k(i,j)$ in den einzelnen Schwellwert-Feldern (3) auf. Die Schwellwerte $S_k(i,j)$ sind z.B. ebenfalls mit 8 bit codiert. Im Schwellwert-Speicher (8) mögen 64 verschiedene quadratische Schwellwert-Felder (3) mit jeweils 16 x 16 Schwellwerten $S_k(i,j)$ abgespeichert sein.

Ein erster Adreßgenerator (9) erzeugt zeilenweise x,y-Adressen, welche den Ortskoordinaten x und y der Belichtungspunkte (6) in der Aufzeichnungsfläche (1) entsprechen. Die x-Adressen bezeichnen die laufenden Nummern der möglichen Belichtungspunkte (6) in einer Zeile (5), die y-Adressen die Nummern der laufenden Zeilen (5). Im allgemeinen ist die Auflösung der Belichtungspunkte höher als die Auflösung der Bildpunkte, deren Halbtonwerte D(x,y) im Bild-Speicher (1) gespeichert sind. Deshalb werden die x,y-Adressen mit einem ersten Adreßumsetzer (10) in u,v-Adressen der gröber aufgelösten Bildpunkte umgesetzt. Der erste Adreßumsetzer (10) berücksichtigt den Maßstabunterschied zwischen der Auflösung der Bildpunkte und der Auflösung der Belichtungspunkte. Der erste Adreßumsetzer (10) implementiert die Umsetzungs-Gleichungen:

$$u = a * x$$
$$v = b * y$$

In den Gleichungen sind a und b die entsprechenden Maßstabsfaktoren in x- und y-Richtung. Die Adreßumsetzung kann z.B. durch Multiplizierer oder durch geeignet gefüllte Tabellen-Speicher realisiert werden. Statt eines einfachen Adreßumsetzers kann auch eine Interpolations-Einrichtung verwendet werden, die aus mehreren benachbarten u,v-Bildwerten des Bild-Speichers (7) einen Halbtonwert D(x,y) für die x,y-Adresse errechnet. Für den Sonderfall, daß die Bildpunkte bereits in der Auflösung der Belichtungspunkte gespeichert sind, wird keine Adreßumsetzung oder Interpolation benötigt. Insgesamt sorgt die Anordung aus Bild-Speicher (7), erstem Adreßgenerator (9) und erstem Adreßumsetzer (10) dafür, daß für jede x,y-Adresse ein Halbtonwert D(x,y) aus dem Bild-Speicher (7) ausgelesen wird.

Ein zweiter Adreßgenerator (11) erzeugt ebenfalls zeilenweise x,y-Adressen, welche den Ortskoordinaten x und y der möglichen Belichtungspunkte (6) in der Aufzeichnungsfläche (1) entsprechen. Der erste Adreßgenerator (9) ist mit dem zweiten Adreßgenerator (11) synchronisiert. In einem zweiten Adreßumsetzer (12) wird jede x-Adresse in Teiladressen p und i umgesetzt, wobei, unter der Annahme, daß ein Teilfeld (2) aus 16 x 16 Belichtungspunkten besteht, p ein Vielfaches von 16 und i ein Rest, der kleiner als 16 ist. In gleicher Weise wird jede y-Adresse in Teiladressen q und j umgesetzt.

Der zweite Adreßumsetzer (12) realisiert somit die Gleichungen:

| | |
|---|---|
| $p = [x/16]$ | $p = $ ganze Zahl |
| $i = x \bmod 16$ | $i = $ ganze Zahl, $0 <= i < 16$ |
| $q = [y/16]$ | $q = $ ganze Zahl |
| $j = y \bmod 16$ | $j = $ ganze Zahl, $0 <= j < 16$ |

Die eckigen Klammern bedeuten, daß die nächstkleinere ganze Zahl des Divisionsergebnisses genommen wird. Die Teiladresse p gibt somit an, im wievielten Schwellwert-Feld (3) entlang einer Zeile sich die x-Adresse befindet, die Teiladresse i gibt an, an welcher Position in x-Richtung in dem betreffenden Schwellwert-Feld (3) sich die x-Adresse befindet. Entsprechend gibt die Teiladresse q an, in welcher Reihe von Schwellwert-Feldern (3) sich die y-Adresse befindet (Fig. 1), und die Teiladresse j gibt an, an welcher Position in y-Richtung sich die Zeile (5) in der Reihe von Schwellwert-Feldern (3) befindet.

Die Teiladressen p und q adressieren einen Index-Speicher (13), in den zuvor eine Folge von Zufallszahlen k geladen wurde. Die Werte von k liegen in dem beschriebenen Ausführungsbeispiel zwischen 1 und 64, da ein Vorrat von 64 verschiedenen Schwellwert-Feldern (3) vorhanden ist. Der Index-Speicher (13) ist zweidimensional organisiert. Für jede mögliche Position eines Schwellwert-Feldes (3) in der Aufzeichnungsfläche (1) gemäß Fig. 1 enthält der Index-Speicher (13) eine Zahl, die die Feldnummer k des dort zu verwendenden Schwellwert-Feldes (3) enthält. Die Teiladresse p adressiert den Index-Speicher (13) in x-Richtung, die Teiladresse q in y-Richtung. Die ausgelesene Feldnummer k bestimmt, welches der 64 Schwellwert-Felder (3) im Schwellwert-Speicher (8) adressiert wird. Die Teiladressen i und j, die direkt an den Schwellwert-Speicher (8) gelegt werden, bestimmen, aus welcher Position innerhalb eines Schwellwert-Feldes (3) mit der Feldnummer k ein Schwellwert $S_k(i,j)$ ausgelesen wird. Da sich die Teiladresse q nur alle 16 Zeilen ändert, wird während 16 aufeinanderfolgenden Zeilen (5) immer wieder die gleiche Folge von Schwellwert-Feldern (3) durchlaufen. Mit der Änderung von q wird in den darauffolgenden 16 Zeilen (5) dann eine andere Zufallsfolge der Schwellwert-Felder (3) aufgerufen.

Die aus dem Bild-Speicher (7) ausgelesenen Halbtonwerte D(x,y) und die aus dem Schwellwert-Speicher (8) ausgelesenen Schwellwerte $S_k(i,j)$ werden einem Vergleicher (14) zugeführt.

Der Vergleicher (14) vergleicht für jede x,y-Adresse, d.h. für jeden möglichen Belichtungspunkt (6), den Halbtonwert D(x,y) aus dem Bild-Speicher (7) mit dem entsprechenden Schwellwert $S_k(i,j)$ aus dem Schwellwert-Speicher (8) und erzeugt z.B. den Binärwert B(x,y) = 1, wenn $S_k(i,j)$ kleiner oder gleich D(x,y) ist und den Binärwert B(x,y) = 0, wenn $S_k(i,j)$ größer als D(x,y) ist. Eine inverse Erzeugung von B(x,y) ist ebenso möglich. Wichtig ist nur, daß für jeden möglichen Belichtungspunkt (6) ein anderer Schwellwert $S_k(i,j)$ für die Schwellwert-Entscheidung verwendet wird.

Dem Vergleicher (14) ist eine Einrichtung (15) nachgeschaltet, der die Binärwerte B(x,y) zugeführt werden. Die Einrichtung (15) kann als Speicher ausgebildet sein, in dem die Binärwerte B(x,y) zur späteren Weiterverarbeitung abgelegt werden. Die Einrichtung (15) kann aber auch ein Ausgabegerät, z.B. ein

6

Farbauszugs-Recorder, sein.

In einer anderen Ausführungsform kann der Index-Speicher (13) auch eindimensional organisiert sein. Er enthält dann die Feldummern k einer Reihe von Schwellwert-Feldern (3) aus der Aufteilung der Aufzeichnungsfläche (1) in Schwellwert-Felder (3). In dem Fall gibt der zweite Adreßumsetzer (12) nach jeweils 16 Zeilen (5), also wenn die Teiladresse q um eins erhöht wird, ein Meldesignal an eine zentrale Steuerung. Die Steuerung, die z.B. aus einem Mikrocomputer und einem Steuerungsprogramm besteht, lädt dann vor Beginn der nächsten Zeile (5) eine neue Zufallszahlenfolge in den Index-Speicher (13).

In einer weiteren Ausführungsform ohne Index-Speicher können die Feldnummern k der Schwellwert-Felder (3) auch als Zufallszahlen von einem in den zweiten Adreßumsetzer (12) integrierten Zufallszahlen-Generator erzeugt werden. Dabei ist der Zufallszahlen- Generator so programmiert, daß er jeweils nach 16 Belichtungspunkten (6) eine neue Zufallszahl k erzeugt, dies aber so, daß 16 Zeilen (6) lang die gleiche Folge von Zufallszahlen k für eine Reihe von Schwellwert-Feldern (3) entsteht, und für jeweils weitere 16 Zeilen (6) eine andere Folge von Zufallszahlen k. In dieser Ausführungsform werden vom zweiten Adreßumsetzer (12) aus der x,y-Adresse nach den obigen Gleichungen nur die Teiladressen i und j abgeleitet.

Weitere Ausführungsformen und Varianten der Adresserzeugung für den Schwellwert-Speicher (8) sind denkbar.

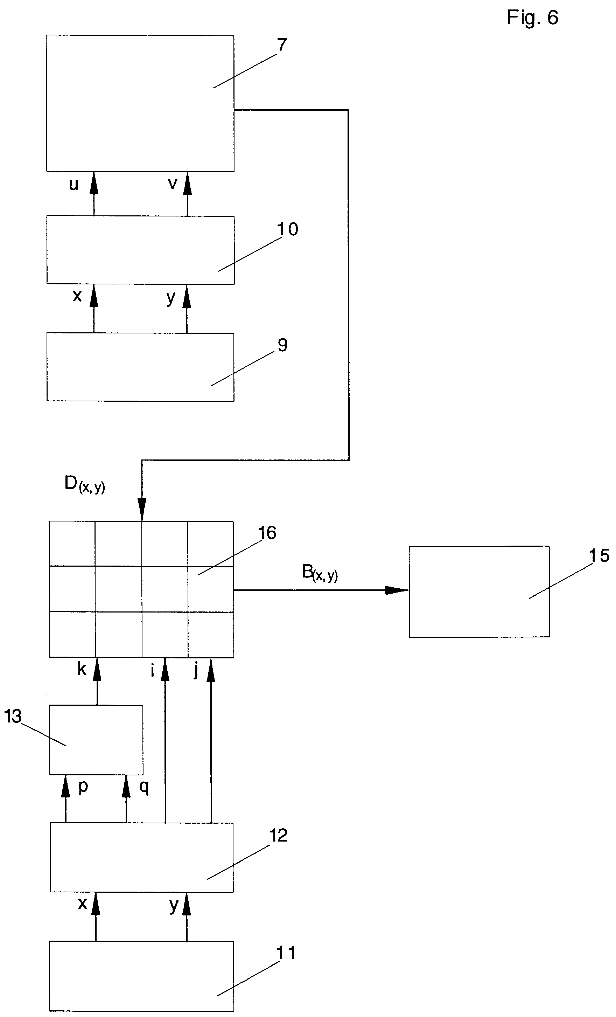

Fig. 6 zeigt ein weiteres Ausführungsbeispiel für eine Einrichtung zur Durchführung des Verfahrens in einem Blockschaltbild für den Fall, daß der Vergleich der Schwellwerte $S_k(i,j)$ mit den Halbtonwerten $D(x,y)$ in einen Vorprozeß verlagert ist.

Die Einrichtung weist wiederum einen Bild-Speicher (7), einen ersten Adreßgenerator (9), einen ersten Adreßumsetzer (10), einen zweiten Adreßgenerator (11), einen zweiten Adreßumsetzer (12), einen Index-Speicher (13) und eine Einrichtung (15) zur Weiterverarbeitung auf. Der Schwellwert-Speicher (8) nach Fig. 5 ist durch einen Binärwert-Speicher (16) ersetzt worden.

In dieser Einrichtung werden in einem Vorprozeß die Schwellwerte $Sk(i,j)$ jedes der 64 Schwellwert-Felder (3) mit allen 256 möglichen Halbtonwerten $D(x,y)$ verglichen und daraus entsprechende Binärwert-Felder $B_{kd}(i,j)$ erzeugt, die in dem Binärwert-Speicher (16) abgespeichert werden. Der Index k bezeichnet das zugehörige Schwellwert-Feld (3) und der Index d den zugehörigen Halbtonwert $D(x,y)$. Mit 64 verschiedenen Schwellwert-Feldern (3) und 256 verschiedenen Halbtonwerten $D(x,y)$ entstehen so 64 x 256 = 16384 Binärwert-Felder $B_{kd}(i,j)$, die jeweils eine Größe von 16 x 16 Binärwerten $B(x,y)$ haben.

Wie in der Einrichtung nach Fig. 5 beschrieben, wird der Bild-Speicher (7) durch den ersten Adreßgenerator (9) und den ersten Adreßumsetzer (10) adressiert. Ebenso wird auch der Binärwert-Speicher (16) durch den zweiten Adreßgenerator (11), den zweiten Adreßumsetzer (12) und den Index-Speicher (13) adressiert, wobei die Teiladresse k eine Gruppe von Binärwert-Feldern auswählt. Als weitere Teiladresse wird dem Binärwert-Speicher (16) direkt der Halbtonwert $D(x,y)$ zugeführt, der aus der durch k angewählten Untergruppe von 256 Binärwert-Feldern dasjenige Binärwert-Feld auswählt, das dem Halbtonwert $D(x,y)$ entspricht. Die Teiladressen i und j zeigen schließlich auf die Position des Belichtungspunktes innerhalb des 16 x 16 Pixel großen Binärwert-Feldes $B_{kd}(i,j)$, das durch k und $D(x,y)$ selektiert wurde. Der Binärwert $B(x,y)$ an dieser Position wird direkt als Ausgabewert verwendet.

Das erfindungsgemäße Verfahren zur Umwandlung von Halbtonwerten in hochaufgelöste Binärwerte bei der frequenzmodulierten Rasterung wurde am Beispiel eines zu reproduzierenden Halbton-Farbbildes erläutert. Das erfindungsgemäße Verfahren kann sebstverständlich auch bei der Rasterung von Schwarz/Weiß-Halbtonbildern verwendet werden.

**Patentansprüche**

1. Verfahren zur Umwandlung von Halbtonwerten in Binärwerte bei der frequenzmodulierten Rasterung von zu reproduzierenden Halbtonbildern, bei dem jeder Halbtonwert eines Halbtonbildes durch eine entsprechende Anzahl von auf einer Aufzeichnungsfläche ungleichmäßig verteilten Rasterpunkten wiedergegeben wird, bei dem die Aufzeichnungsfläche [1] in mögliche Aufzeichnungspunkte unterteilt ist und bei dem die durch punkt- und zeilenweise Abtastung des Halbtonbildes gewonnenen Halbtonwerte [D(x,y)] durch Vergleich mit zugeordneten Schwellwerten [S(i,j)] in Binärwerte [B(x,y)] umgewandelt werden, welche für jeden möglichen Aufzeichnungspunkt entscheiden, ob dieser als Rasterpunkt aufgezeichnet wird oder nicht,
**dadurch gekennzeichnet,** daß
   - die Aufzeichnungsfläche [1] in Teilfelder [2] mit jeweils einer vorgegebenen Anzahl von möglichen Aufzeichnungspunkten aufgeteilt wird,

- vor dem Vergleich jedem Teilfeld [2] ein Schwellwert-Feld [3] mit einer anderen Verteilung der Schwellwerte [S(i,j)] innerhalb des Schwellwert-Feldes [3] zugeordnet wird **und**
- jeweils die zu den betreffenden Teilfeldern [2] gehörigen Halbtonwerte [D(x,y)] zum Vergleich mit den Schwellwerten [S(i,j)] der zugeordneten Schwellwert-Felder [3] herangezogen werden.

2. Verfahren nach Anspruch 1, **dadurch gekennzeichnet**, daß die den einzelnen Teilfeldern [2] zugeordneten Schwellwert-Felder [3] jeweils eine zufällig geänderte Verteilung der Schwellwerte [S(i,j)] aufweisen.

3. Verfahren nach Anspruch 1 oder 2, **dadurch gekennzeichnet**, daß
- ein Vorrat von Schwellwert-Feldern [3] mit jeweils einer anderen, vorzugsweise zufällig geänderten, Verteilung der Schwellwerte [S(i,j)] innerhalb der Schwellwert-Felder [3] generiert und abgespeichert wird **und**
- die Zuordnung eines Schwellwert-Feldes [3] zu einem Teilfeld [2] durch Zufallsauswahl aus dem gespeicherten Vorrat von Schwellwert-Feldern [3] erfolgt.

4. Verfahren nach Anspruch 1 oder 2, **dadurch gekennzeichnet**, daß
- ein Schwellwert-Feld [3] generiert und gespeichert wird **und**
- die Verteilung der Schwellwerte [S(i,j)] innerhalb des gespeicherten Schwellwert-Feldes [3] jeweils vor der Zuordnung des Schwellwert-Feldes [3] zu einem Teilfeld [2] geändert, vorzugsweise zufällig geändert, wird.

5. Verfahren nach einem der Ansprüche 1 bis 4, **dadurch gekennzeichnet**, daß die Anzahl der Schwellwerte [S(i,j)] eines Schwellwert-Feldes [3] gleich der Anzahl von möglichen Aufzeichnungspunkten pro Teilfeld [2] gewählt wird.

6. Verfahren nach einem der Ansprüche 1 bis 5, **dadurch gekennzeichnet**, daß die Schwellwert-Felder [3] rechteckig oder quadratisch sind.

7. Verfahren nach einem der Ansprüche 1 bis 6, **dadurch gekennzeichnet**, daß die Schwellwert-Felder [3] gleich groß sind.

8. Verfahren nach einem der Ansprüche 1 bis 7, **dadurch gekennzeichnet**, daß sich bei der Zuordnung von Teilflächen [2] und Schwellwert-Feldern [3] eine zufällige Verteilung der Schwellwerte [S(i,j)] in beiden Ausdehnungen der Aufzeichnungsfläche [1] nicht wiederholt.

9. Verfahren nach einem der Ansprüche 1 bis 8, **dadurch gekennzeichnet**, daß
- der Vergleich von Halbtonwerten [D(x,y)] und Schwellwerten [S(i,j)] für alle möglichen Halbtonwerte vor der Weiterverarbeitung der Binärwerte [B(x,y)] vorgenommem wird,
- die durch den Vergleich gewonnenen Binärwerte [B(x,y)] als Binärwert-Felder [$B_{kd}(i,j)$] abgespeichert werden **und**
- bei der Weiterverarbeitung die Halbtonwerte [D(x,y)] die entsprechenden Binärwert-Felder [$B_{kd}(i,j)$] auswählen.

10. Verfahren nach einem der Ansprüche 1 bis 9, **dadurch gekennzeichnet**, daß jedes der Schwellwert-Felder [3] oder die Gesamtheit der Schwellwert-Felder [3] mindestens so viele verschiedene Schwellwerte [S(i,j)] enthält wie verschiedene Halbtonwerte [D(x,y)] im Halbtonbild enthalten sind.

11. Verfahren nach einem der Ansprüche 1 bis 10, **dadurch gekennzeichnet**, daß die Verteilung der hohen und niedrigen Schwellwerte [S(i,j)] in den Schwellwert-Feldern [3] im wesentlichen gleichmäßig ist.

12. Verfahren nach einem der Ansprüche 1 bis 11, **dadurch gekennzeichnet**, daß Gruppen von ähnlich großen Schwellwerten [S(i,j)] in den Schwellwert-Feldern [3] dicht beieinander liegen, so daß entsprechende Gruppen von dicht beieinander liegenden Binärwerten [B(x,y)] entstehen.

13. Einrichtung zur Durchführung des Verfahrens, **gekennzeichnet durch**

- einen Bild-Speicher [7] zur Ablage der Halbtonwerte [D(x,y)] eines zu reproduzierenden Halbtonbildes,
- einen Schwellwert-Speicher [8] zur Ablage eines Vorrates an Schwellwert-Feldern [3] mit jeweils einer anderen, vorzugsweise zufällig geänderten, Verteilung der Schwellwerte [S(i,j)] innerhalb der Schwellwert-Felder [3],
- einen Index-Speicher [13] zur Zufallsauswahl der in dem Schwellwert-Speicher [8] abgelegten Schwellwert-Felder (3],
- einen ersten Adreßgenerator [9] zur Adressierung des Bild-Speichers [7],
- einen zweiten Adreßgenerator [11] und einen Adreßumsetzer [12] zur Adressierung des Index-Speichers [13] und des Schwellwert-Speichers [8] **und** durch
- einen Vergleicher [14] zur Erzeugung von Binärwerten [B (x,y)] durch Vergleich der Halbtonwerte [D(x,y)] mit den Schwellwerten [S(x,y)].

14. Einrichtung zur Durchführung des Verfahrens, **gekennzeichnet durch**
- einen Bild-Speicher [7] zur Ablage der Halbtonwerte [D(x,y)] eines zu reproduzierenden Halbtonbildes,
- einen Binärwert-Speicher [16] zur Ablage der durch Vergleich von Halbtonwerten [D(x,y)] und Schwellwerten [$S_k(x,y)$] gewonnenen Binärwert-Felder [$B_{kd}(i,j)$]
- einen Index-Speicher [13] zur Zufallsauswahl der in dem Binärwert-Speicher [16] abgelegten Binärwert-Felder [$B_{kd}(i,j)$],
- einen ersten Adreßgenerator [9] zur Adressierung des Bild-Speichers [7] **und**
- einen zweiten Adreßgenerator [11] und einen Adreßumsetzer [12] zur Adressierung des Index-Speichers [13] und des Binärwert-Speichers [16], wobei der Binärwert-Speicher [16] zum Auslesen und Weiterverarbeiten der Binärwerte [B(x,y)] durch die aus dem Bild-Speicher [7] ausgelesenen Halbtonwerte [D(x,y)] adressierbar ist.

15. Einrichtung nach Anspruch 13 oder 14, **dadurch gekennzeichnet**, daß zwischen den ersten Adreßgenerator [9] und den Bild-Speicher [7] ein Adreßumsetzer [10] geschaltet ist.

16. Einrichtung nach Anspruch 13, 14 oder 15, **dadurch gekennzeichnet**, daß der Vergleicher [14] bzw. der Binärwert-Speicher [16] an eine Einheit [15] zur Weiterverarbeitung der Binärwerte [B(x,y)] angeschlossen ist.

17. Einrichtung nach Anspruch 16, **dadurch gekennzeichnet**, daß die Einheit [15] als Speicher oder Ausgabegerät ausgebildet ist.

Fig. 3

Fig. 1

j

| 18 | 146 | 50 | 178 | 218 | 90 | 186 | 58 | 180 | 52 | 148 | 20 | 252 | 124 | 156 | 28 |
|---|---|---|---|---|---|---|---|---|---|---|---|---|---|---|---|
| 210 | 82 | 242 | 114 | 26 | 154 | 250 | 122 | 116 | 244 | 84 | 212 | 188 | 60 | 220 | 92 |
| 130 | 2 | 162 | 34 | 234 | 106 | 10 | 138 | 228 | 100 | 196 | 68 | 108 | 236 | 76 | 204 |
| 66 | 194 | 98 | 226 | 42 | 170 | 202 | 74 | 164 | 36 | 4 | 132 | 44 | 172 | 12 | 140 |
| 222 | 94 | 126 | 254 | 22 | 150 | 246 | 118 | 112 | 240 | 144 | 16 | 120 | 248 | 24 | 152 |
| 30 | 158 | 190 | 62 | 214 | 86 | 54 | 182 | 48 | 176 | 208 | 80 | 184 | 56 | 216 | 88 |
| 14 | 142 | 110 | 238 | 102 | 230 | 70 | 198 | 128 | 0 | 96 | 224 | 72 | 200 | 40 | 168 |
| 206 | 78 | 174 | 46 | 166 | 38 | 6 | 134 | 192 | 64 | 160 | 32 | 136 | 8 | 232 | 104 |
| 253 | 125 | 93 | 221 | 149 | 21 | 117 | 245 | 227 | 99 | 131 | 3 | 139 | 11 | 235 | 107 |
| 61 | 189 | 157 | 29 | 85 | 213 | 181 | 53 | 35 | 163 | 195 | 67 | 203 | 75 | 171 | 43 |
| 237 | 109 | 141 | 13 | 229 | 101 | 133 | 5 | 83 | 211 | 243 | 115 | 219 | 91 | 187 | 59 |
| 45 | 173 | 205 | 77 | 165 | 37 | 197 | 69 | 147 | 19 | 179 | 51 | 155 | 27 | 251 | 123 |
| 41 | 169 | 201 | 73 | 241 | 113 | 17 | 145 | 7 | 135 | 231 | 103 | 63 | 191 | 31 | 159 |
| 105 | 233 | 137 | 9 | 177 | 49 | 81 | 209 | 199 | 71 | 167 | 39 | 255 | 127 | 223 | 95 |
| 121 | 249 | 25 | 153 | 161 | 33 | 129 | 1 | 23 | 151 | 55 | 183 | 239 | 111 | 143 | 15 |
| 185 | 57 | 217 | 89 | 97 | 225 | 65 | 193 | 215 | 87 | 119 | 247 | 175 | 47 | 79 | 207 |

4

3

Fig.2

EP 0 612 181 A1

x

6    5

| x x x x x x x x x x x x x x x x x x x | | 1. Zeile |
| | | 2. Zeile |
| | | 3. Zeile |

y

2a

2b

| | | 14. Zeile |
| | | 15. Zeile |
| | | 16. Zeile |
| | | 17. Zeile |
| | | 18. Zeile |
| | | 19. Zeile |

2c

2d

| | | 30. Zeile |
| | | 31. Zeile |
| | | 32. Zeile |

Fig. 4

$D_{(x,y)}$

$B_{(x,y)}$

$S_{k(i,j)}$

Fig. 5

Fig. 6

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X<br>Y | US-A-4 449 150 (T. KATO)<br><br><br>* column 3, line 47 - column 5, line 6 *<br>--- | 1-3,5-8<br>9-11,<br>13-17 | H04N1/40 |
| A | EP-A-0 201 674 (INTERNATIONAL BUSINESS MACHINES CORPORATION)<br>* column 6, line 5 - line 19 *<br>--- | 6 | |
| Y | Proceedings SPIE - The International Society for Optical Engineering; Image Processing Algorithms and Techniques II; 25 Februari - 1March 1991, San Jose, California; Vol. 1452<br>pages 47-56<br>T. MITSA and K. J. PARKER: "Digital halftoning using a blue noise mask"<br>* page 48, paragraph 2.1 *<br>--- | 9,14 | |
| Y | GB-A-2 098 022 (DAINIPPON SCREEN SEIZO K.K.)<br>* page 7, line 5 - line 126 *<br>--- | 10 | TECHNICAL FIELDS SEARCHED (Int.Cl.5) |
| Y | EP-A-0 373 449 (DAINIPPON SCREEN MFG. CO.)<br>* claims 5,6 *<br>--- | 11 | H04N |
| Y | US-A-4 507 685 (N. KAWAMURA)<br>* column 2, line 66 - column 3, line 9 *<br>* column 8, line 8 - line 37 *<br>--- | 13-17 | |
| Y | WO-A-91 12686 (EASTMAN KODAK COMPANY)<br>* page 12, line 6 - line 14 *<br>--- | 16,17 | |
| A | FR-A-2 298 242 (INTERNATIONAL BUSINESS MACHINES CORPORATION)<br>----- | | |

The present search report has been drawn up for all claims

| Place of search | Date of completion of the search | Examiner |
|---|---|---|
| THE HAGUE | 25 April 1994 | De Roeck, A |

EPO FORM 1503 03.82 (P04C01)